## Europäisches Patentamt

## European Patent Office

## Office européen des brevets

(19) ⑲

(11) Veröffentlichungsnummer: **0 143 294**
**B1**

(12) ⑫

# EUROPÄISCHE PATENTSCHRIFT

(45) Veröffentlichungstag der Patentschrift:
**02.06.89**

(51) Int. Cl.⁴: **C 02 F 1/68, B 01 J 4/02**

(21) Anmeldenummer: **84112286.4**

(22) Anmeldetag: **12.10.84**

(54) Vorrichtung zum dosierbaren Zugeben eines Stoffes zu einem Lösungs- oder Verdünnungsmittel.

(30) Priorität: **29.10.83 DE 3339420**

(43) Veröffentlichungstag der Anmeldung:
**05.06.85 Patentblatt 85/23**

(45) Bekanntmachung des Hinweises auf die Patenterteilung:
**02.06.89 Patentblatt 89/31**

(84) Benannte Vertragsstaaten:
**AT BE CH DE FR GB IT LI LU NL SE**

(56) Entgegenhaltungen:
**CH-A-168 356**
**CH-A-479 131**
**FR-A-2 109 300**
**US-A-2 064 627**
**US-A-2 272 721**
**US-A-3 094 135**
**US-A-4 094 786**

(73) Patentinhaber: **Weber Apparatebau GmbH, Bahnhofstrasse 27- 31, D-3206 Giesen (DE)**

(72) Erfinder: **Weber, Klaus, Bischofskamp 35, D-3200 Hildesheim (DE)**

(74) Vertreter: **König, Norbert, Dipl.- Phys. Dr., Patentanwälte Leine & König Burckhardtstrasse 1, D-3000 Hannover 1 (DE)**

LIBER, STOCKHOLM 1989

EP 0 143 294 B1

## Beschreibung

Die Erfindung betrifft eine Vorrichtung zum dosierbaren Zugeben eines Stoffes zu einem Lösungs- oder Verdünnungsmittel gemäß Oberbegriff des Anspruchs 1.

Es sind Dosiervorrichtungen bekannt, bei denen die Zumischung eines Stoffes, beispielsweise eines Desinfektionsmittels, in einen Behälter mit einem Verdünnungsmittel, meist, Wasser, selbst erfolgt. Die zum Einsatz kommende Lösung wird also in einem Behälter hergestellt und aus diesem je nach Bedarf entnommen mit Hilfe einer Pumpe. Diese bekannte Vorrichtung ist relativ aufwendig.

Es ist eine weitere Dosiervorrichtung bekannt, bei der ein vom Wasser durchströmtes Bauteil eingesetzt wird, das einen Teil der Wasserdruckenergie in eine Bewegungsenergie umwandelt, die dazu benutzt wird, eine Pumpe anzutreiben, die ihrerseits Desinfektionsmittel drucklos in einen Wasserstrom eingibt. Diese bekannte Dosiervorrichtung ist baulich aufwendig und zwangsläufig mit einem Wasserdruckverlust verbunden, der dazu führt, daß die Durchflußmengen bei kleiner werdenden Wasserdrücken sich erheblich vermindern.

Bei beiden bekannten Dosiervorrichtungen besteht grundsätzlich eine starre Kopplung zwischen Wasserstrom und Zugabe des Desinfektionsmittels. Aufgrund der mit der Änderung des Wasserdurchflusses sich ändernden Pumpgeschwindigkeit ergibt sich eine relativ große Dosierungenauigkeit, die bei den bekannten. Vorrichtungen etwa bei 15 - 20 % liegt, woraus auch ein relativ hoher Desinfektionsmittelverbrauch resultiert.

Die Aufgabe der vorliegenden Erfindung besteht deshalb darin, eine Vorrichtung der eingangs genannten Art so auszubilden, daß der bauliche Aufwand verringert und die Dosiergenauigkeit erhöht wird.

Diese Aufgabe wird durch die im Kennzeichen des Anspruchs 1 angegebene Ausbildung gelöst.

Die erfindungsgemäße Ausbildung sieht eine Pegel-Regeleinrichtung zur Einstellung eines vorbestimmten Pegels des Lösungs- oder Verdünnungsmittels im Speicher vor. Ferner ist eine Auslaufleitung vorgesehen, über die das Lösungs- oder Verdünnungsmittel allein unter Nutzung der Schwerkraft aus dem Speicher ausläuft. Die erfindungsgemäße Ausbildung hat den Vorteil, daß die Ausflußmenge des Lösungs- oder Verdünnungsmittels, das meist Wasser ist, allein durch den jeweils eingeregelten statischen Druck und den als konstant zu betrachtenden Reibungswiderstand der Auslaufleitung bestimmt wird. Hierdurch ist eine Genauigkeit des Ausflußvolumens bzw. der Dosierung von unter 1 % erreichbar.

Eine besonders vorteilhafte Weiterbildung der erfindungsgemäßen Aufgabenlösung ist im Anspruch 2 angegeben. Durch den Anschluß der Zuführleitung für den Dosierstoff, der dem aus dem Speicher auslaufenden Lösungs- oder Verdünnungsmittel zugemischt werden soll, unmittelbar an die Auslaufleitung werden sozusagen nur frische Gebrauchslösungen hergestellt, wodurch die Gefahr einer Verkeimung praktisch vollständig vermieden ist.

Durch die weiteren Ausgestaltungen nach den Ansprüchen 7 bis 13, 15 und 33 werden nachteilige Strömungsverhältnisse im Speicher unterdrückt, Luftbläschen an den durchlässigen Bauteilen abgefangen und durch das einströmende Lösungs- oder Verdünnungsmittel eingetragene Wasserenergie gebremst und verteilt.

Die gemäß den Unteransprüchen 17 und 18 eingesetzten Dosierpumpen arbeiten sehr genau. Die Förderschwankungen liegen unter 1 % und die zu erwartenden Dosierabweichungen liegen unter 2 %, wenn vermieden wird, daß Luft in die Saugleitung und damit in die Pumpe gelangt. Die Zufuhrmenge wird durch Änderung des Hubes der Pumpen eingestellt.

In den Ansprchen 19 bis 27 und 29 sind verschiedene Sicherheitseinrichtungen angegeben, um Fehler erkennen zu können und ggf. die Vorrichtung abschalten zu können.

Die Erfindung soll nachfolgend anhand der beigefügten Zeichnung, in der Ausführungsbeispiele dargestellt sind, näher erläutert werden.

Es zeigt

Fig. 1 ein Funktionsschema der erfindungsgemäßen Vorrichtung,

Fig. 2 eine Ansicht eines bei der erfindungsgemäßen Vorrichtung eingesetzten Speichers für ein Lösungs- oder Verdünnungsmittel, teilweise in weggebrochener Darstellung,

Fig. 3 eine genauere Darstellung eines Siebeinsatzes des Speichers nach Fig. 2,

Fig. 4 eine Draufsicht auf die Anordnung nach Fig. 3,

Fig. 5 einen Schnitt durch eine andere Ausführungsform eines Speichers zur Aufnahme des Lösungs- oder Verdünnungsmittels,

Fig. 6 ein bei der erfindungsgemäßen Vorrichtung in der Zuführleitung für Dosierstoff eingesetztes Rückschlagventil mit integrierter Dosierstoffüberwachungseinrichtung und

Fig. 7 eine Ansicht einer Ausführungsform der erfindungsgemäßen Vorrichtung.

Die Zeichnung zeigt eine Vorrichtung zum dosierbaren Zugeben eines Stoffes zu einem Lösungs- oder Verdünnungsmittel, wobei nachfolgend der Stoff ein Desinfektionsmittel und das Lösungs- oder Verdünnungsmittel Wasser sein soll. Die Vorrichtung weist einen Speicher 2 für Wasser und einen Vorratsbehälter 4 für Desinfektionsmittel auf. In den Speicher 2 führt von oben zentral eine Versorgungsleitung 6, über die kontinuierlich oder portionsweise Wasser in den Speicher 2 gegeben wird. Der Speicher 2 weist eine senkrechte Auslaufleitung 8 auf mit einem T-Stück 10, über das eine Zuführleitung für das Desinfektionsmittel an das Auslaufrohr 8 angeschlossen ist. In der Zuführleitung 12 ist eine Dosierpumpe 14 mit einem Motor 16 und ein Rückschlagventil 18 angeordnet.

In der Versorgungsleitung befinden sich ein Druckschalter 20, ein Druckregler 22 und ein Magnetventil 24.

Der Speicher 2 ist mit einem Sensor 26 zur Abtastung und Einregelung des Pegels 28 des Wassers im Speicher ausgestattet. Mit Hilfe dieses Sensors 26, dessen Sensorausgangssignale in einer Elektronikeinheit 30 ausgewertet werden, wird das Magnetventil 24 derart gesteuert, daß der Pegel 28 auf einem vorbestimmten Wert gehalten wird.

In der Zuführleitung 12 ist eine Desinfektionsmittelfluß-Überwachungseinrichtung 32 vorgesehen, die integriert im Rückschlagventil angeordnet ist. Ferner ist in der Zuführleitung, und zwar in der Saugleitung der Dosierpumpe 14, ein Füllstandssensor 34 angeordnet.

Am unteren Ende der Saugleitung 36 ist ein Fußventil (nicht dargestellt) vorgesehen, das die Saugleitung beim Vorratsbehälterwechsel verschließt und ein Eindringen von Luft in die Saugleitung verhindert.

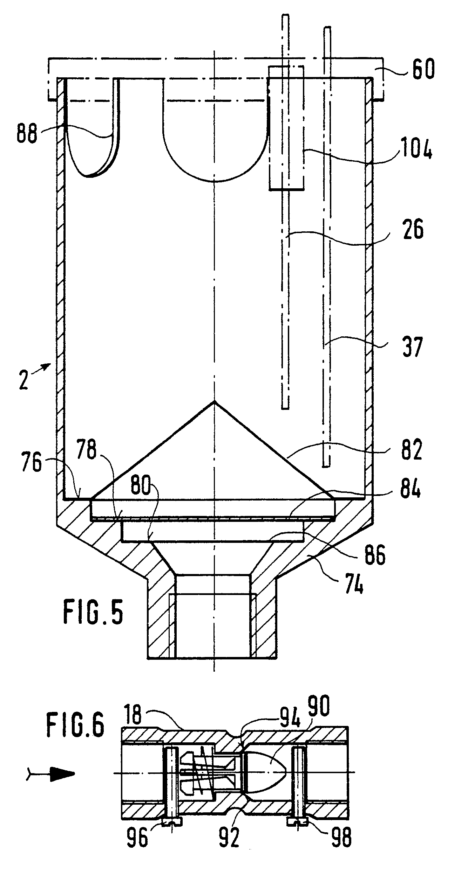

Im Speicher 2 ist ferner eine Füllstandsüberwachungseinrichtung 37 (s. Fig. 5) angeordnet, die einen minimalen Füllstand überwacht und bei Unterschreitung dieses Füllstandes die Vorrichtung automatisch abschaltet.

Die Desinfektionsmittelfluß-Überwachungseinrichtung 32 kontrolliert das Vorhandensein von Desinfektionsmittel in der Zuführleitung. Die Überwachung erfolgt mit Prüfimpulsen, deren zeitliche Folge überwacht wird. Bleibt ein solcher Prüfimpuls über eine vorgegebene Zeit, beispielsweise sechs Sekunden, aus, wird die Vorrichtung automatisch über die Elektronikeinheit 30 abgeschaltet.

Die Füllstandsüberwachungseinrichtung 34 überwacht den Desinfektionsmittelfüllstand im Kanister und gibt über eine Leitung 38 ein Signal an die Elektronikeinheit 30 ab, wenn ein minimaler Füllstand unterschritten wird. Dieser Zustand wird über eine Kontrolleuchte 40 angezeigt, die auch betätigt wird, wenn die Desinfektionsmittelfluß-Überwachungseinrichtung 32 anspricht.

In der Elektronikeinheit 30 wird ferner die Steuerimpulsfolge des Magnetventiles 24, das über eine Leitung 42 gesteuert wird, überwacht. Bleibt länger als eine vorbestimmte Zeit, beispielsweise sieben Sekunden, der Schaltimpuls für das Magnetventil 24 aus, wird die Vorrichtung abgeschaltet und gleichzeitig eine Anzeige 44 betätigt.

Der Druckschalter 20 überwacht den Wasserdruck und schaltet die Vorrichtung ab bei Unterschreitung eines vorbestimmten Druckes, beispielsweise 0,8 bar. Auch dieser Fehlerzustand wird optisch angezeigt.

Mit Hilfe des Druckreglers 22 wird ein bestimmter Druck des Wassers in der Versorgungsleitung 6 eingestellt.

Die Dosierpumpe 14 ist eine motorisch angetriebene Pumpe beliebiger Bauart, vorzugsweise eine Schlauchpumpe, die mit Hilfe eines Schrittmotors angetrieben wird.

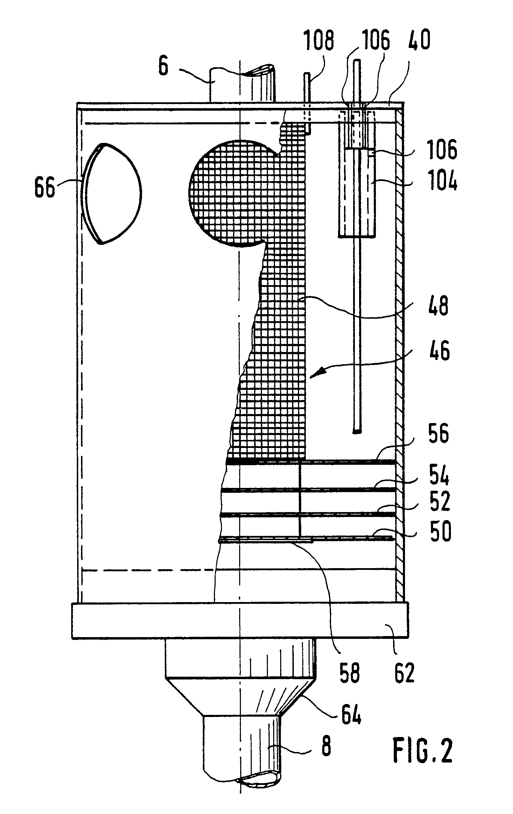

Zur Vermeidung von Strömungsturbulenzen und zur Vermeidung des Eintrags von Luftbläschen in die über die Auslaufleitung 9 ausströmende Wassermenge ist im Speicher 2 eine Siebanordnung 46 angeordnet. Diese besteht aus einem senkrecht angeordneten Zylinder 48 mit perforierter Wandung oder aus einem Gittermaterial. In diesen Zylinder 48 ragt etwa koaxial die Versorgungsleitung 6 hinein. Unterhalb dieses Zylinders sind mehrere waagerechte beabstandete Siebe 50 - 56 angeordnet, wobei zur Strömungsverteilung eines dieser Siebe mit einer Prallplatte 58 ausgestattet ist, die zentral angeordnet ist und deren Durchmesser gleich oder größer als der Innendurchmesser des Zylinders 48 ist. In der Zeichnung (Fig. 2) ist diese Prallplatte am unteren Siebeinsatz 50 angeordnet. Diese Prallplatte kann aber auch an einem der anderen Siebe angeordnet sein.

Der Speicher 2 ist mit einem Deckel 60 und einem Boden 62 versehen, welcher mit einem trichterförmigen Auslaufstutzen 64 ausgestattet ist. Der Speicher selbst hat vorzugsweise eine zylindrische Form und ist oberhalb des einzuregelnden Pegels 28 mit Wandungsbohrungen 66 versehen.

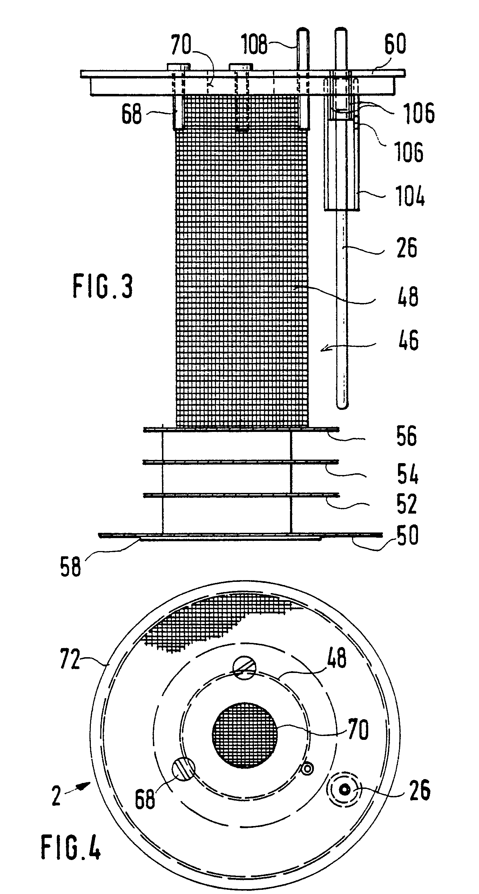

Die Fig. 3 zeigt den Siebeinsatz 46 zusammen mit dem Deckel des Speichers 2 in Einzeldarstellung. Der Zylinder 48 ist mit Hilfe von Befestigungsmitteln 68 auf der Unterseite des Deckels 60 angebracht.

Die Fig. 4 zeigt eine Draufsicht auf den Deckel. Es sind eine zentrale Öffnung 70 für das Versorgungsrohr 6 der Siebzylinder 48 und die zylindrische Wand 72 des Speichers 2 zu erkennen, ferner der Pegelsensor 26 und die Befestigungsmittel 68 des Zylinders 48.

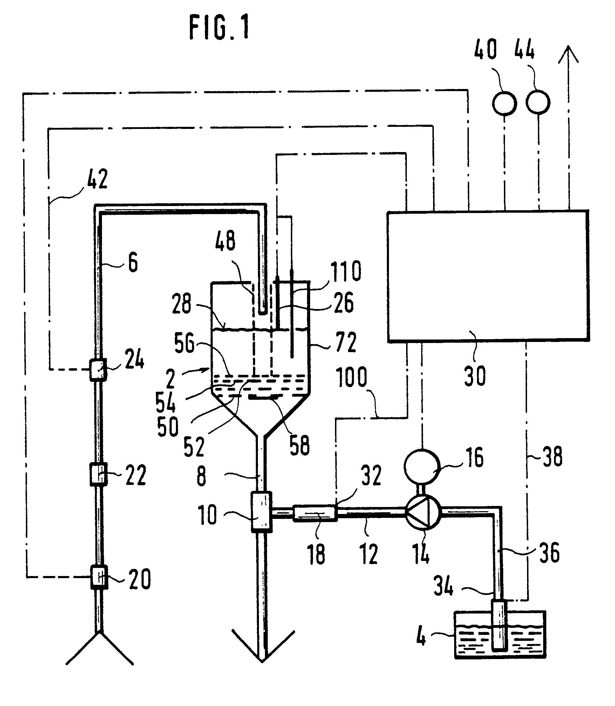

In der Fig. 5 ist eine andere Ausführungsform des erfindungsgemäßen Speichers 2 dargestellt. Der Boden 74 dieses Speichers ist trichterförmig ausgebildet und weist auf seiner Innenseite ringförmige Stufen 76, 78 und 80 auf. Auf diesen Stufen lagern Siebe 82, 84 und 86. Das oberste Sieb 82 ist kegelförmig ausgebildet. Die Siebe sind entweder auf die Stufen aufgelegt oder auf den Stufen befestigt. Obwohl bei der Speicherausführung gemäß Fig. 5 der senkrechte Siebzylinder 48 gemäß Fig. 1 - 4 fehlt, kann selbstverständlich ein solcher auch bei der Ausführungsform nach Fig. 5 vorgesehen sein. Auch der Speicher nach Fig. 5 ist mit Wandungsdurchbrüchen 88 versehen, die am oberen Rand ausgebildet sind und selbstverständlich oberhalb des einzuregelnden Pegels liegen müssen.

Die Fig. 6 zeigt das Rückschlagventil 18 nach Fig. 1 in seinen Einzelheiten. Das Ventil weist, wie üblich, einen entgegen Strömungsrichtung vorgespannten Ventilkörper 90 auf, dem ein Ventilsitz 92 zugeordnet ist. Ventilkörper 90 und Ventilsitz 92 bilden ein Ventil 94. Beiderseits des Ventiles 94 sind Elektroden 96 und 98 angeordnet, die Teil der im Zusammenhang mit Fig. 1 beschriebenen Desinfektionsmittelfluß-Überwachungseinrichtung sind. Mit Hilfe dieser Elektroden wird der Leitwert des in der Zuflußleitung 12 strömenden Desinfektionsmittels gemessen und überwacht. Die Elektroden werden über Leitungen 100 (s. Fig. 1) gespeist. Eine Unterbrechung im Desinfektionsmittelfluß bewirkt eine Leitwertsänderung, die in der Elektronikeinheit 30 (Fig. 1) festgestellt wird und zu einer Abschaltung der Vorrichtung und Anzeige des Defektes führt.

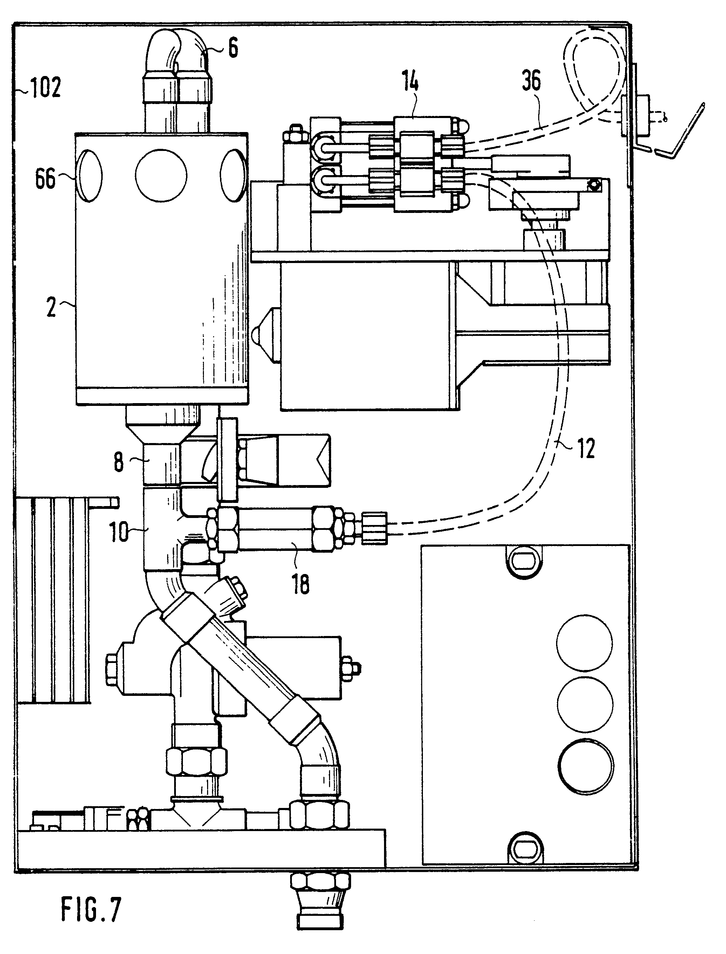

Die Fig. 7 zeigt die Vorrichtung in industriemäßiger Ausführung in einem Gehäuse 102. Ansonsten kann hinsichtlich der einzelnen Bauteile auf die Beschreibung der Fig. 1 - 6 verwiesen werden.

Die Vorrichtung nach den Fig 1 - 7 arbeitet wie folgt: Über die Versorgungsleitung 6 wird stetig, bei Verwendung eines Magnetventiles 24 portionsweise dem Speicher 2 Wasser zugeführt, dessen Pegel 28 mit Hilfe des Sensors 26 und der Elektronikeinheit 30 und des Magnetventiles 24 überwacht und auf einen vorbestimmten Wert eingeregelt wird. Das Wasser im Speicher 2 strömt über die Auslaufleitung 8 nach unten aus, wobei die Strömungsgeschwindigkeit allein durch den statischen Druck und die Reibungsverhältnisse in der Auslaufleitung 8 bestimmt wird. Mit Hilfe der Dosierpumpe 14 wird Desinfektionsmittel aus dem Vorratsbehälter 4 stetig oder portionsweise dem über die Leitung 8 ausströmenden Wasser zugemischt, wobei die Dosiermenge durch Steuerung des Motors 16 oder des Hubweges der Pumpe 14 einstellbar ist.

Gemäß Zeichnung erfolgt die Zumischung des Desinfektionsmittel zwar in der Auslaufleitung 8; die Zumischung kann aber auch im Speicher 2 selbst erfolgen, indem beispielsweise die Zuführleitung 12 in die zylindrische Wand 72 des Speichers 2 führt.

Anstelle des beschriebenen Druckreglers 22 kann auch ein Durchflußmengenbegrenzer oder ein Durchflußmengenregler in der Versorgungsleitung eingesetzt werden.

Als Sensor zur Abtastung und Einregelung des Pegels im Speicher 2 wird vorzugsweise eine Meßsonde verwendet, um die ein Schutzrohr 104 (Fig. 2) als Spritzschutz und zur Vermeidung von Kriechströmen aufgrund von Wasserfilmen angeordnet ist. Um zu vermeiden, daß sich Kondenswasser unter dem Schutzrohr 104 bildet, das einen nachteiligen Wasserfilm bilden würde, sind Bohrungen bzw. Löcher 106 zwischen dem Schutzrohr 104 und der Meßsonde und/oder im Rohrmantel auf der dem Wasserzulauf bzw. dem Zylinder abgewandten Seite vorgesehen zur Erzeugung einer Luftzirkulation.

Der Zylinder 48 kann aus einem Metall hergestellt sein. In diesem Falle dient er zweckmäßigerweise als Masseelektrode, die einen Anschluß 108 aufweist, für die Meßsonde 26, vgl. Fig. 6. Falls der Zylinder 48 aus einem nichtleitenden Material besteht, ist eine gesonderte Masseelektrode 110 (s. Fig. 1) vorgesehen. In diesem Fall umgibt das oben erwähnte Schutzrohr beide Elektroden (Masseelektrode und Meßsonde). Es kann aber auch ein Schutzschirm (nicht dargestellt) vorgesehen werden, der zwischen den beiden Elektroden 110 und 26 und dem Wasserzulauf bzw. dem Zylinder 48 angeordnet ist.

Das Rückschlagventil 18 besteht insgesamt aus einem elektrisch nichtleitenden Material, beispielsweise Kunststoff. Bei geschlossenem Ventil durch den Ventilkörper 90 wird die Leitung (elektrolytische Leitung) zwischen den Elektroden 96 und 98 unterbrochen, was beispielsweise auftritt bei einem klemmenden bzw. festsitzenden Ventilkörper 90 oder bei Ausfall der Dosierpumpe 14.

Die Pumpe 14 kann eine einfache und preiswerte Zahnradpumpe sein. Um dann noch die notwendige Genauigkeit erzielen zu können, ist druckseitig der Zahnradpumpe in der Leitung 12 zur Erhöhung des Druckes eine regelbare Stauscheibe oder eine regelbare Düse vorgesehen.

**Patentansprüche**

1. Vorrichtung zum dosierbaren Zugeben eines Stoffes, insbesondere eines flüssigen Desinfektionsmittels, zu einem Lösungs- oder Verdünnungsmittel, insbesondere Wasser, mit einem Speicher für das Lösungs- oder Verdünnungsmittel und mit einem Vorratsbehälter für den Dosierstoff sowie mit einer Dosierpumpe, die den Dosierstoff in regelbaren Mengen aus dem Vorratsbehälter dem Lösungs- oder Verdünnungsmittel zuführt, dadurch gekennzeichnet, daß der Speicher (2) für das Lösungs- oder Verdünnungsmittel eine Pegel-Regeleinrichtung (26, 30, 24) aufweist und daß an den Speicher eine Auslaufleitung (8) angeschlossen ist, derart, daß die Menge des auslaufenden Lösungs- oder Verdünnungsmittels durch den jeweils vorhandenen statischen Druck des Lösungs- oder Verdünnungsmittels bestimmt ist.

2. Vorrichtung nach Anspruch 1, dadurch gekennzeichnet, daß an die Auslaufleitung (8) eine Zuführleitung (12) angeschlossen ist zum Zugeben des Dosierstoffes zu dem Lösungs- oder Verdünnungsmittel.

3. Vorrichtung nach Anspruch 1, dadurch gekennzeichnet, daß an den Speicher (2) eine Zuführleitung angeschlossen ist zum Zugeben des Dosierstoffes zu dem Lösungs- oder Verdünnungsmittel.

4. Vorrichtung nach Anspruch 1, 2 oder 3, dadurch gekennzeichnet, daß in den Speicher (2) eine Versorgungsleitung (6) mündet, über die Lösungs- oder Verdünnungsmittel kontinuierlich oder portionsweise in den Speicher eingebbar ist.

5. Vorrichtung nach einem der Ansprüche 1 bis 4, dadurch gekennzeichnet, daß in der Versorgungsleitung (6) ein von der Pegel-Regeleinrichtung gesteuertes Ventil (24) angeordnet ist.

6. Vorrichtung nach Anspruch 2 oder 3, dadurch gekennzeichnet, daß in der Zuführleitung (12), in die eine regelbare Dosierpumpe (14, 16) geschaltet ist, ein Rückschlagventil (18) angeordnet ist.

7. Vorrichtung nach Anspruch 4 oder 5, dadurch gekennzeichnet, daß die Versorgungsleitung (6) etwa von oben oder seitlich unter beliebigem Winkel in den Speicher (2) führt.

8. Vorrichtung nach Anspruch 7, dadurch gekennzeichnet, daß die Versorgungsleitung (6) zentral in den Speicher (2) führt.

9. Vorrichtung nach Anspruch 7 oder 8, dadurch gekennzeichnet, daß die Versorgungsleitung (6) in einen aufrechten, im Speicher (2) angeordneten Zylinder (48) mündet, der in das Lösungs- oder Verdünnungsmittel hineinragt.

10. Vorrichtung nach einem der vorhergehenden Ansprüche, dadurch gekennzeichnet, daß im Speicher (2) unterhalb der Mündung der Versorgungsleitung (6) oder unterhalb des Zylinders (48) wenigstens ein Bauteil (50, 52, 54, 56; 82, 84, 86) aus wasser- und/oder luftdurchlässigem Material angeordnet ist.

11. Vorrichtung nach Anspruch 10, dadurch gekennzeichnet, daß drei oder vier beabstandete Bauteile unterhalb der Mündung der Versorgungsleitung oder unterhalb des Zylinders angeordnet sind.

12. Vorrichtung nach Anspruch 10 oder 11, dadurch gekennzeichnet, daß wenigstens ein Bauteil (50) mit einer in Verlängerung der Mündung der Versorgungsleitung oder des Zylinders (48) angeordneten Prallplatte (58) ausgestattet ist, deren Durchmesser gleich oder größer ist als der Innendurchmesser der Versorgungsleitung oder des Zylinders (48).

13. Vorrichtung nach einem der Ansprüche 10 bis 12, dadurch gekennzeichnet, daß das oberste Bauteil (82) kegelförmig ausgebildet ist.

14. Vorrichtung nach einem der Ansprüche 10 bis 12, dadurch gekennzeichnet, daß das oberste Bauteil (56) mit dem unteren offenen Ende des Zylinders (48) verbunden ist.

15. Vorrichtung nach einem der vorhergehenden Ansprüche, dadurch gekennzeichnet, daß der Speicher (2) ein zylindrischer Hohlkörper ist, dessen unteres Ende trichterförmig (64, 74) ausgebildet ist.

16. Vorrichtung nach einem der vorhergehenden Ansprüche, dadurch gekennzeichnet, daß der im Speicher (2) angeordnete Zylinder (48) perforiert oder aus einem gitterförmigen oder einem luftdurchlässigen Material gefertigt ist.

17. Vorrichtung nach Anspruch 5, dadurch gekennzeichnet, daß das Ventil ein Magnetventil (24) ist.

18. Vorrichtung nach Anspruch 6, dadurch gekennzeichnet, daß die Dosierpumpe eine motorisch angetriebene Pumpe beliebiger Bauart, vorzugsweise eine Schlauchpumpe ist.

19. Vorrichtung nach Anspruch 18, dadurch gekennzeichnet, daß die Schlauchpumpe (14) von einem Schrittmotor (16) betätigt wird.

20. Vorrichtung nach Anspruch 2, 3 oder 6, dadurch gekennzeichnet, daß in der Zuführleitung (12) ein Rückschlagventil (18) angeordnet ist.

21. Vorrichtung nach Anspruch 1, 5 oder 17, dadurch gekennzeichnet, daß die Pegel-Regeleinrichtung einen die Oberfläche des Lösungs- oder Verdünnungsmittel im Speicher (2) abtastenden Sensor (26) aufweist, dessen Ausgangssignale das Magnetventil (24) steuern.

22. Vorrichtung nach einem der vorhergehenden Ansprüche, gekennzeichnet durch wenigstens eine Sicherheitseinrichtung zur Messung und Überwachung des Speicherfüllstandes, des Vorratsbehälterfüllstandes, des Zuflusses des Dosierstoffes, des Zuflusses des Lösungs- oder Verdünnungsmittels sowie des Druckes des Lösungs- oder Verdünnungsmittels in der Versorgungsleitung.

23. Vorrichtung nach Anspruch 22, dadurch gekennzeichnet, daß die Sicherheitseinrichtung (32) zur Messung und Überwachung des Dosierstoffflusses den elektrischen Leitwert des durch die Zuführleitung (12) strömenden Dosierstoffes mißt und ein Ausgangssignal erzeugt, das mit einem Sollwert in einem Vergleicher verglichen wird, der bei Unterschreitung des Sollwertes ein Abschalt- und Anzeigesignal erzeugt.

24. Vorrichtung nach Anspruch 23, dadurch gekennzeichnet, daß die Sicherheitseinrichtung in vorbestimmten zeitlichen Abständen Prüfimpulse erzeugt, deren zeitgerechtes Erscheinen überprüft wird und bei deren Ausbleiben nach Ablauf einer vorbestimmten Zeit ein Abschalt- und Anzeigesignal erzeugt wird.

25. Vorrichtung nach Anspruch 22, dadurch gekennzeichnet, daß die Sicherheitseinrichtung zur Überwachung des Füllstandes im Speicher bei Unterschreitung eines vorgegebenen minimalen Füllstandes ein Fehleranzeige- und Abschaltsignal erzeugt.

26. Vorrichtung nach Anspruch 22, dadurch gekennzeichnet, daß die Sicherheitseinrichtung zur Messung und Überwachung des Füllstandes (34) im Vorratsbehälter (4) bei Unterschreitung eines vorbestimmten minimalen Füllstandes ein Anzeige- und Abschaltsignal erzeugt.

27. Vorrichtung nach Anspruch 22, dadurch gekennzeichnet, daß die Sicherheitseinrichtung zur Messung und Überwachung des Flusses des Lösungs- oder Verdünnungsmittels die zeitliche Folge der Schaltsignale für das Magnetventil (24) überwacht und bei Ausbleiben der Schaltsignale über eine vorbestimmte Zeit ein Anzeige- und Abschaltsignal erzeugt.

28. Vorrichtung nach Anspruch 22, dadurch gekennzeichnet, daß die Sicherheitseinrichtung zur Überwachung des Druckes des Lösungs- oder Verdünnungsmittels einen in der Versorgungsleitung (6) angeordneten Druckschalter (20) aufweist, der unterhalb eines vorbestimmten Druckes ein Anzeige- und Abschaltsignal erzeugt.

29. Vorrichtung nach Anspruch 2 oder einem der vorhergehenden Ansprüche, dadurch gekennzeichnet, daß die Zuführleitung (12) etwa senkrecht über ein T-Stück (10) an die Auslaufleitung (8) angeschlossen ist.

30. Vorrichtung nach einem der vorhergehenden Ansprüche, dadurch gekennzeichnet, daß in der Versorgungsleitung (6) ein Druckregler (22) zum Einstellen eines vorbestimmten Druckes oder ein Durchflußmengenbegrenzer oder Durchflußmengenregler angeordnet ist.

31. Vorrichtung nach einem der Ansprüche 10 bis 14, dadurch gekennzeichnet, daß die Bauteile in einem in den Speicher einsetzbaren Einsatz angeordnet sind.

32. Vorrichtung nach Anspruch 23, dadurch gekennzeichnet, daß die Sicherheitseinrichtung zur Messung und Überwachung des Dosierstoffflusses im Rückschlagventil (18) integriert ausgebildet ist und zwei beiderseits des Ventiles (94) angeordnete, einem Leitwertmeßkreis zugeordnete Elektroden (96, 98) aufweist.

33. Vorrichtung nach einem der Ansprüche 10 bis 14, dadurch gekennzeichnet, daß das Bauteil ein Sieb oder ein plattenförmiges Teil oder Formteil ist.

34. Vorrichtung nach Anspruch 21, dadurch gekennzeichnet, daß der Sensor als Meßsonde ausgebildet ist und mit wenigstens einem oberen Teil in einem als Spritzschutz dienenden Schutzrohr (104) angeordnet ist, das unterhalb des Deckels (60) befestigt ist und dessen Mantel die Meßsonde mit Abstand umgibt.

35. Vorrichtung nach Anspruch 34, dadurch gekennzeichnet, daß im Rohrmantel auf der dem Wasserzulauf abgewandten Seite und/oder zwischen Meßsonde und Rohrmantel den Deckel (60) durchsetzend Bohrungen oder Löcher (106) zur Erzeugung einer Luftzirkulation zwecks Vermeidung von Kondenswasser ausgebildet sind.

36. Vorrichtung nach einem der vorhergehenden Ansprüche, dadurch gekennzeichnet, daß der Zylinder (48) aus Metall besteht und als mit einem Anschluß (108) versehene Masseelektrode für die als Elektrode ausgebildete Meßsonde (26) vorgesehen ist.

37. Vorrichtung nach einem der vorhergehenden Ansprüche, dadurch gekennzeichnet, daß eine gesonderte Masseelektrode (110) vorgesehen ist.

38. Vorrichtung nach Anspruch 37, dadurch gekennzeichnet, daß die Masseelektrode (110) zusammen mit der Elektrode der Meßsonde (26) von einem Schutzrohr gemäß Anspruch 34 und 35 umgeben ist oder daß ein Schutzschirm zwischen Masseelektroden/Meßsonden-Anordnung und Wasserzulauf oder Zylinder (48) angeordnet ist.

39. Vorrichtung nach Anspruch 32, dadurch gekennzeichnet, daß das Gehäuse, der Ventilsitz (92) und der Ventilkörper (90) des Rückschlagventiles (18) aus einem elektrisch nichtleitenden Material, vorzugsweise Kunststoff, bestehen.

40. Vorrichtung nach einem der vorhergehenden Ansprüche, dadurch gekennzeichnet, daß die Dosierpumpe (14) eine Zahnradpumpe ist und daß in der Zuführleitung (12) eine regelbare Stauscheibe oder regelbare Düse angeordnet ist.

## Claims

1. Means for the addition of measurable quantities of a substance, more especially of a liquid disinfecting agent, to a solvent or diluent, more especially water, with a reservoir for the solvent or diluent and with a storage container for the dosing substance and also with a proportioning pump, which supplies the said substance in regulatable quantities from the storage container to the solvent or diluent, wherein the reservoir (2) for the solvent or diluent comprises a level control device (26, 30, 24) and wherein the reservoir has connected thereto an outlet pipe (8) in such manner that the quantity of the outflowing solvent or diluent is detetmined by the static pressure of the solvent or diluent as it exists at the time.

2. Means according to claim 1, wherein the outlet pipe (8) has connected thereto a supply pipe (12) for the addition of the dosing substance to the solvent or diluent,

3. Means according to claim 1, wherein the reservoir (2) has connected thereto a supply pipe for the addition of the dosing substance to the solvent or diluent.

4. Means according to claim 1, 2 or 3, wherein the reservoir (2) has opening thereinto a feed pipe (6), by way of which the solvent or diluent is able to be introduced continuously or in portions into the reservoir.

5. Means according to one of claims 1 to 4, wherein a valve (24) controlled by a level control device is arranged in the feed pipe (6).

6. Means according to claim 2 or 3, wherein a non-return valve (18) is arranged in the supply pipe (12), into which is connected a regulatable proportioning pump (14, 16).

7. Means according to claim 4 or 5, wherein the feed pipe (6) possibly extends from above or laterally at an appropriate angle into the reservoir (2).

8. Means according to claim 7, wherein the supply pipe (6) extends centrally into the reservoir (2).

9. Means according to claim 7 or 8, wherein the supply pipe (6) opens into an upright cylinder (48) which is arranged in the reservoir (2) and which projects into the solvent or diluent.

10. Means according to one of the preceding claims, wherein at least one component (50, 52, 54, 56; 82, 84, 86) of waterpermeable and/or airpermeable material is arranged in the reservoir, beneath the outlet opening of the supply pipe (6) or beneath the cylinder (48).

11. Means according to claim 10, wherein three or four spaced components are arranged beneath the mouth of the supply pipe or beneath the cylinder.

12. Means according to claim 10 or 11, wherein at least one structural part or component (50) is equipped with a baffle plate (58) arranged as an extension of the mouth of the supply pipe or of the cylinder (48), the diameter of which plate is equal to or larger than the internal diameter of the supply pipe or of the cylinder (48).

13. Means according to one of the claims 10 to 12, wherein the uppermost structural part (82) is made conical.

14. Means according to one of the claims 10 to 12, wherein the uppermost structural part (56) is connected to the bottom open end of the cylinder (48).

15. Means according to one of the preceding claims, wherein the reservoir (2) is a cylindrical hollow member, of which the bottom end (64, 74) is made funnel-shaped,

16. Means according to one of the preceding claims, wherein the cylinder (48) arranged in the reservoir (2) is perforated or is made of a grid-like material or an air-permeable material.

17. Means according to claim 5, wherein the valve is a magnetic valve (24).

18. Means according to claim 6, wherein the proportioning pump is a motor-driven pump of any appropriate construction, advantageously a hose pump.

19. Means according to claim 18, wherein the said pump (14) is actuated by a stepping motor,

20. Means according to claim 2, 3 or 6, wherein a non-return valve (18) is arranged in the supply pipe (12).

21. Means according to claim 1, 5 or 17, wherein the level-control device comprises a sensor (26) sensing the surface of the solvent or diluent in the reservoir (2), the output signals of the said sensor controlling the magnetic valve (24).

22. Means according to one of the preceding claims, characterised by at least one safety means for measuring and supervising the filling level in the reservoir, the filling level in the supply container, the supply flow of the dosing substance, the supply flow of the solvent or diluent and also the pressure of the solvent or diluent in the supply pipe.

23. Means according to claim 22, wherein the safety means (32) for measuring and supervising the flow of the dosing substance measures the electrical conductance of the dosing substance flowing through the supply pipe (12) and generates an output signal, which is compared with a set or rated value in a comparator which, in the event of the rated value not being reached, produces a switch-off and indicating signal,

24. Means according to claim 23, wherein the safety means, at predetermined time intervals, produces checking pulses, of which the occurrence at the correct time is checked, and in the event of these continuing after a predetermined time has elapsed, the safety means produces a switch-off and indicating signal.

25. Means according to claim 22, wherein the safety means for supervising the filling level in the reservoir generates a fault-indicating and switch-off signal in the event of a prescribed minimal filling level not being reached.

26. Means according to claim 22, wherein the safety means for measuring and supervising the filling level (34) in the supply container (4) generates an indicating and switch-off signal in the event of a prescribed minimal filling level not being reached.

27. Means according to claim 22, wherein the safety means for measuring and supervising the flow of the solvent or diluent supervises the time sequence of the switching signals for the magnetic valve (24) and, in the event of the switching signals continuing beyond a predetermined time period, generates an indicating and switch off signal,

28. Means according to claim 22, wherein the safety means for supervising the pressure of the solvent or diluent comprises a pressure switch (20) arranged in the supply pipe (6), the said switch producing an indicating and switch-off signal when the pressure is below a predetermined level.

29. Means according to claim 2 or one of the preceding claims, wherein the supply pipe (12) is connected approximately perpendicularly by means of a T-piece (10) to the discharge pipe (8).

30. Means according to one of the preceding claims, wherein the supply pipe (6) has arranged therein a pressure regulator (22) for setting a predetermined pressure or a limiting means or regulator for the throughflow quantities.

31. Means according to one of the claims 10 to 14, wherein the structural parts are arranged in a unit which can be inserted into the reservoir.

32. Means according to claim 23, wherein the safety means for measuring and supervising the flow of dosing or proportioning liquid is integrally formed in the non-return valve (18) and comprises two electrodes (96, 98) arranged on both sides of the valve (94) and associated with a conductance-measuring circuit.

33. Means according to one of the claims 10 to 14, wherein the structural part is a strainer or a plate-like part or shaped element,

34. Means according to claim 21, wherein the sensor is formed as a probe and is arranged with at least an upper part in a protective tube (104) serving as splash guard, which tube is fixed beneath the cover (60) and the wall of which surrounds the probe with spacing.

35. Means according to claim 34, wherein bores or holes (106) extending through the cover (60) are formed in the tube wall on the side away from the water inlet and/or between the probe and tube wall for the purpose of producing an air circulation to avoid condensation water,

36. Means according to one of the preceding claims, wherein the cylinder (48) consists of metal and is provided as a solid electrode having a connection (108) for the probe (26), which is constructed as electrode.

37. Means according to one of the preceding claims, wherein a separate solid electrode (110) is provided.

38. Means according to claim 37, wherein the solid electrode (110), together with the electrode of the measuring probe (26) is enclosed by a protective tube according to claims 34 and 35, or wherein a protective shield is disposed between the arrangement of solid electrodes/measuring probes and water inlet or cylinder (48).

39. Means according to claim 32, wherein the housing, the valve seat (92) and the valve member (90) of the non-return valve (18) consist of an electrically non-conducting material, advantageously a synthetic plastics material.

40. Means according to one of the preceding claims, wherein the proportioning pump (14) is a gear pump and wherein an adjustable baffle plate or adjustable nozzle is arranged in the feed pipe (12).

**Revendications**

1. Dispositif pour l'addition dosée d'un corps, en particulier d'un produit de désinfection liquide, à un solvant ou un diluant, en particulier de l'eau, avec un réservoir pour le solvant ou le diluant et avec un accumulateur pour le produit à doser ainsi qu'avec une pompe de dosage qui amène le produit à doser en quantotés réglables de l'accumulateur au solvant ou au diluant, caractérisé en ce que le réservoir (2) pour le solvant ou le diluant présente un dispositif de réglage de niveau (26, 30, 24) et qu'un conduit de décharge (8) est relié au réservoir (2), de telle manière que la quantité de solvant ou de diluant qui s'écoule est déterminée par la pression statique du solvant ou du diluant présente respectivement.

2. Dispositif selon la revendication 1, caractérisé en ce qu'un conduit d'amenée (12) est raccordé au conduit de décharge (8) pour l'addition du corps dosé au solvant ou au diluant.

3. Dispositif selon la revendication 1, caractérisé en ce qu'un conduit d'amenée est raccordé au réservoir (2) pour l'addition du corps dosé au solvant ou au diluant.

4. Dispositif selon la revendication 1, 2 ou 3, caractérisé en ce qu'un conduit d'alimentation (6) débouche dans le réservoir (2), par lequel le solvant ou le diluant peut être introduit dans le réservoir en continu ou par portions.

5. Dispositif selon l'une des revendications 1 à 4, caractérisé en ce qu'une soupape (24) commandée par le dispositif de réglage de niveau est disposée dans le conduit d'alimentation (6).

6. Dispositif selon la revendication 2 ou 3, caractérisé en ce qu'une soupape antiretour (10) est disposée dans le conduit d'amenée (12) dans lequel est montée une pompe de dosage réglable (14, 16).

7. Dispositif selon la revendication 4 ou 5, caractérisé en ce que le conduit d'alimentation (6) conduit dans le réservoir (2) environ d'au-dessus ou latéralement selon un angle quelconque.

8. Dispositif selon la revendication 7, caractérisé en ce que le conduit d'alimentation (6) conduit centralement dans le réservoir (2).

9. Dispositif selon la revendication 7 ou 8, caractérisé en ce que le conduit d'alimentation (6) débouche dans un cylindre droit (48) disposé dans le réservoir (2), qui fait saillie à l'intérieur du solvant ou du diluant.

10. Dispositif selon l'une des revendications précédentes, caractérisé en ce qu'au moins un élément de construction (50, 52, 54, 56; 82, 84, 86) en un matériau perméable à l'eau et/ou à l'air est disposé dans le réservoir (2) en-dessous du débouché du conduit d'alimentation (6) ou en-dessous du cylindre (48).

11. Dispositif selon la revendication 10, caractérisé en ce que trois ou quatre éléments de construction écartés sont disposés en-dessous du débouché du conduit d'alimentation ou en-dessous du cylindre.

12. Dispositif selon la revendication 10 ou 11, caractérisé en ce qu'au moins un élément de construction (50) est muni d'une plaque de déviation (58) disposée dans le prolongement du débouché du conduit d'alimentation ou du cylindre (48), dont le diamètre est égal ou supérieur au diamètre intérieur du conduit d'alimentation ou du cylindre (48).

13. Dispositif selon l'une des revendications 10 à 12, caractérisé en ce que l'élément de construction (82) le plus au-dessus est construit en forme de cône,

14. Dispositif selon l'une des revendications 10 à 12, caractérisé en ce que l'élément de construction (56) le plus au-dessus est relié à l'extrémité inférieure ouverte du cylindre (48).

15. Dispositif selon l'une des revendications précédentes, caractérisé en ce que le réservoir (2) est un corps creux cylindrique dont l'extrémité inférieure est construite en forme d'entonnoir. (64, 74).

16. Dispositif selon l'une des revendications précédentes, caractérisé en ce que le cylindre (48) disposé dans le réservoir (2) est perforé ou fabriqué en un matériau en forme de grille ou perméable à l'air.

17. Dispositif selon la revendication 5, caractérisé en ce que la soupape est une vanne magnétique (24).

18. Dispositif selon la revendication 6, caractérisé en ce que le pompe de dosage est une pompe entraînée par moteur de type quelconque, de préférence une pompe tubulaire.

19. Dispositif selon la revendication 18, caractérisé en ce que la pompe tubulaire (14) est actionnée par un moteur pas-à-pas (16).

20. Dispositif selon la revendication 2, 3 ou 6, caractérisé en ce qu'une soupape antiretour (18) est disposée dans le conduit d'amenée (12).

21. Dispositif selon la revendication 1, 5 ou 17, caractérisé en ce que le dispositif de réglage de niveau présente un capteur (26) palpant la surface du solvant ou du diluant dans le réservoir (2), dont les signaux de sortie commandent la vanne magnétique (24).

22. Dispositif selon l'une des revendications précédentes, caractérisé par au moins un dispositif de sécurité pour mesurer et surveiller l'état de remplissage du réservoir, l'état de remplissage de l'accumulateur, l'afflux du corps de dosage, l'afflux du solvant ou du diluant, ainsi que la pression du solvant ou du diluant dans le conduit d'alimentation.

23. Dispositif selon la revendication 22, caractérisé ce que le dispositif de sécurité (32) pour mesurer et surveiller l'écoulement du corps de dosage, mesure la conductance électrique du corps de dosaqe s'écoulant dans le conduit d'alimentation (12), et émet un signal de sortie qui est comparé à une valeur de consigne dans un comparateur, léquel émet un signal de mise hors-circuit et de signalisation en cas d'un passage au-dessous de la valeur de consigne.

24. Dispositif selon la revendication 23, caractérisé en ce que le dispositif de sécurité émet à des écartements de temps prédéterminés des signaux de test, dont l'apparition conforme au temps est contrôlée, et un signal de mise hors-circuit et de signalisation est émis dans le cas de leur absence après écoulement d'un temps prédéterminé.

25. Dispositif selon la revendication 22, caractérisé en ce que le dispositif de sécurité, pour surveiller l'état de remplissage du réservoir, émet un signal d'indication de défaut et de mise hors-circuit dans le cas d'un passage au-dessous d'un état remplissage minimal alloué.

26. Dispositif selon la revendication 22, caractérisé en ce que le dispositif de sécurité, pour mesurer et surveiller l'état de remplissage (34) de l'accumulateur (4) émet un signal d'indication et de mise hors-circuit dans le cas d'un passage au-dessous d'un état de remplissage minimal prédéterminé.

27. Dispositif selon la revendication 22, caractérisé en ce que le dispositif de sécurité, pour mesurer et surveiller l'écoulement du solvant ou du diluant, surveille la succession dans le temps des signaux de commutation pour la vanne magnétique (24) et, dans le cas d'une absence des signaux de commutation pendant un temps prédéterminé, émet un signal d'indication et de mise hors-circuit.

28. Dispositif selon la revendication 22, caractérisé en ce que le dispositif de sécurité, pour surveiller la pression du solvant ou du diluant, présente un manocontacteur (20) disposé dans le conduit d'almentation (6) qui! émet un signal d'indication et de mise hors-circuit en dessous d'une pression prédéterminée.

29. Dispositif selon la revendication 2 ou l'une des revendications précédentes, caractérisé en ce que le conduit d'amenée (12) est raccordé sensiblement orthogonalement au conduit de décharge (8) par l'intermédiaire d'une pièce en T (10).

30. Dispositif selon l'une des revendications précédentes, caractérisé en ce qu'un régulateur manométrique de pression (22) pour régler une pression prédéterminée, ou un limiteur de quantité d'écoulement, ou un régulateur de quantité d'écoulement est disposé dans le conduit d'alimentation (6).

31. Dispositif selon l'une des revendications 10 à 14, caractérisé en ce que les éléments de construction sont disposés dans un insert insérable dans le réservoir.

32. Dispositif selon la revendication 23, caractérisé en ce que le dispositif de sécurité, pour mesurer et surveiller l'écoulement du corps de dosage, est intégré dans la soupape antiretour (18) et présenté deux électrodes (96, 98) disposées des deux côtés de la soupape (94) et adjointes à un circuit de mesure de conductance.

33. Dispositif selon l'une des revendications 10 à 14, caractérisé en ce que l'élément de construction est un tamis ou une pièce en formé de plaque ou une pièce préformée.

34. Dispositif selon la revendication 21, caractérisé en ce que le capteur est construit sous forme de sonde de mesure et est disposé par au moins une partie supérieure dans un tube de protection (104) servant de protection contre les projections, qui est fixé au-dessous du couvercle (60) et dont la chemise entoure la sonde de mesure avec écartement.

35. Dispositif selon la revendication 34, caractérisé en ce que des alésagés ou trous (106) traversant le couvercle (60) sont formés dans la chemise du tube du côté opposé à l'entrée d'eau et/ou entre la sonde de mesure et la chemise du tube, pour créer une circulation d'air pour éviter l'eau de condensation.

36. Dispositif selon l'une des revendications précédentes, caractérisé en ce que le cylindre (48) est constitué en métal et est prévu comme électrode de masse munie d'une connexion (108) pour la sonde de mesure (26) construite sous forme d'électrode.

37. Dispositof selon l'une des revendications précédetes, caractérisé en ce qu'une électrode de masse (110) séparée est prévue.

38. Dispositif selon la revendication 37, caractérisé en ce que l'électrode de masse (110) est, en même temps que l'électrode de la sonde de mesure (26), entourée par un tube de protection selon la revendication 34 et 35, ou qu'un écran de protection est disposé entre l'ensemble électrodes de masse/sondes de mesure et l'arrivée d'eau ou le cylindre (48).

39. Dispositif selon la revendication 32, caractérisé en ce que le boîtier, le siège de soupape (92) et le corps de soupape (90) de la soupape antiretour (18) sont constitués en un matériau électriquement non conducteur, avantageusement en matière synthétique.

40. Dispositif selon l'une des revendications précédentes, caractérisé en ce que la pompe de dosage (14) est une pompe à engrenages et qu'un écran réducteur de pression réglable ou une buse réglable est disposé dans le conduit d'amenée (12).

# FIG.1

FIG.2

FIG.3

FIG.4

FIG.5

FIG.6

FIG.7